# EUROPEAN PATENT APPLICATION

(11) **EP 3 254 884 A1**
(43) Date of publication of application: **13.12.2017**
(21) Application number: 16173157.5
(22) Date of filing: 06.06.2016
(51) Int. Cl.: B60L 11/18, B60L 15/20, H02J 7/00

(54) **METHOD OF AND SYSTEM FOR OPERATING A BATTERY IN AN ELECTRICALLY POWERED VEHICLE OF PUBLIC TRANSPORT**

(71) Applicant: ABB Schweiz AG, 5400 Baden (CH)
(72) Inventor: PATEY, Timothy, 8004 Zürich (CH); POLAND, Jan, 5415 Nussbaumen (CH); Mercangoez, Mehmet, 4332 Stein (CH); Zanarini, Alessandro, 5400 Baden (CH); Flückiger, Reto, 8055 Zürich (CH)
(74) Representative: ABB Patent Attorneys

(57) **Abstract**

The present invention of operating a first battery system (10), wherein the first battery system (10) is part of a plurality of interconnected battery systems (10, 12, 14, 16), wherein
- at least the first battery system (10) of the plurality of battery systems (10, 12, 14, 16) is positioned in a first electrically driven vehicle of public transport and at least a second battery system (12, 14, 16) of the plurality of battery systems (10, 12, 14, 16) is positioned in a second electrically driven vehicle of public transport, wherein
- at least the first battery system (10) is connected to at least the second battery system (12, 14, 16) via a data connection (11), wherein
- the first battery system (10) is operated based at least on operating information of the first battery system (10) and of the second battery system (12, 14, 16), and wherein
- the operating information of the first battery system (10) comprise at least one of location information, driving information, and status information of the first battery system (10) and wherein the operating information of the second battery system (12, 14, 16) comprise at least one of location information, driving information, and status information of the second battery system (12, 14, 16).

Such a method provides an improved reliability of a system of public transport.

## Description

### Technical Field

The Invention relates to a method of and a system for operating a battery in an electrically powered vehicle of public transport. Such a method and such a system provide an improved lifetime of the battery and further improves the reliability of public transport.

### Background Art

Battery based energy storing devices are well known in the art and are used, for example, in electrically driven vehicles. Thermal management is thereby an important factor for driving the batteries in appropriate conditions and for securing long-life stability thereof.

Known from US 2014/0012447 A1 is a process for charging a battery pack of a vehicle. The vehicle has a cooling system that automatically turns on to cool the battery pack when its temperature reaches a high threshold temperature. Further, a controller is used which may include a thermal model of a heating performance of the battery pack while under charge, the operating heating rise of the battery pack in the event the vehicle is driven at the predetermined operating condition, and a cooling performance of the cooling system in cooling the battery when the vehicle is parked.

Document US 2012/0297809 A1 describes a thermal management system for an electric vehicle. According to this document, a battery circuit temperature sensor is provided for sensing the temperature of the fluid in the battery circuit. A controller determines that the temperature at the temperature sensor exceeds a selected threshold temperature and the controller may act to hold the temperature beneath a threshold temperature.

Document US 2013/0269911 A1 describes vehicles that include both an electric traction motor and a range extending device such as an internal combustion engine. Such vehicles comprise a thermal management system with a battery circuit, the battery circuit being configured for controlling the temperature of battery packs based on the temperature provided by a battery circuit temperature sensor.

Document WO 2013/158083 describes a vehicle having a drive train having an electrical motor and an internal combustion engine available for propulsion. A control system dynamically establishes rules for operating the drive train. The rules provide for handling requests for propulsion, obtaining data relating to expected conditions of operation including one or more of weather, traffic and road conditions. Responsive to requests for propulsion and the obtained data using telematics it is determined what proportion of a request for propulsion to meet from the internal combustion engine and what proportion to meet from the electrical motor.

Document US 8,620,506 B2 describes a method for thermal management of an electric vehicle. The method detects if a traction battery is connected to a charger and power source. The temperature of the battery is regulated to be within an operating temperature range when the vehicle is operating. The temperature of the battery is regulated to be within a charging temperature range when the battery is connected to the charger and power source and the ambient temperature is outside an environmental temperature range. The battery is preconditioned to a battery drive temperature when the ambient temperature is outside the environmental temperature range and the battery is connected to the charger and power source.

Known from Schwarze, J. Konzeption einer Batteriebusline in Köln. in 6. VDV-Akademie Konferenz Elektrobusse - Markt der Zukunft!? 2015. Berlin, Germany, is a description of the local public transport system in Cologne using electrically driven buses.

Rao, Z. and S. Wang, A review of power battery thermal energy management, Renewable and Sustainable Energy Reviews, 2011. 15(9): p. 4554-4571 describes examinations of thermal behaviour of batteries and of thermal management systems for batteries such as for electrically driven vehicles.

Bandhauer, T.M., S. Garimella, and T.F. Fuller, A critical review of thermal issues in lithium-ion batteries, Journal of the Electrochemical Society, 2011. 158(3): p. R1-R25 describes thermal issues of lithium ion batteries e.g. for electrically driven vehicles.

Known from Ecker, M., et al., Calendar and cycle life study of Li(NiMnCo)O2-based 18650 lithium-ion batteries, Journal of Power Sources, 2014. 248(0): p. 839-851, are studies with regard to state of charge and depth of discharge of a battery.

Elbert, P., Noncausal and causal optimization strategies for hybrid electric vehicles, PhD thesis, 2014, ETH Zurich: Zurich, describes a battery system for electrically driven buses which uses route information for predictive control.

Neubauer, J. and E. Wood, Thru-life impacts of driver aggression, climate, cabin thermal management, and battery thermal management on battery electric vehicle utility, Journal of Power Sources, 2014. 259(0): p. 262-275, describes examining the sensitivity of battery electric vehicles to driver aggression and climate.

CN 103723052 A describes auxiliary systems for electric energy management in electrical buses. Such an auxiliary system uses typical operating conditions mainly using a fixed bus line together with the characteristics of the electric air-conditioning systems and electrical power steering system in order to achieve reduced energy consumption.

Known from WO 2012/161819 A1 is a motor vehicle which has an electric traction motor and a battery pack that provides power to the motor. The battery pack includes a plurality of battery cells. A thermal system includes a battery pack coolant loop, a cabin coolant loop, a power electronics coolant loop and a plurality of controllable valves controlled by a controller to select thermal modes by controlling flow paths of coolant in one or more of the coolant loops.

There is, however, still room for improvements especially regarding operating battery systems of electrically driven vehicles of public transport.

### Summary of invention

It is therefore an object of the present invention to at least partly prevent at least one of the disadvantages known in the art.

In particular, it is an object of the present invention to provide a method of operating a battery system having a good reliability and durability.

These objects are at least partly achieved by a method according to claim 1. These objects are further at least partly achieved by a battery system according to claim 14 and by a use of claim 15. Preferred embodiments of the present invention are defined in the dependent claims, in the description as well as in the figures, wherein further features which are described in the dependent claims, in the description as well as in the figures may form part of the invention either alone or in any combination insofar it is not expressively excluded by word or by context.

The invention relates to a method of operating a first battery system, wherein the first battery system is part of a plurality of interconnected battery systems, wherein
- at least the first battery system of the plurality of battery systems is positioned in a first electrically driven vehicle of public transport and at least a second battery system of the plurality of battery systems is positioned in a second electrically driven vehicle of public transport, wherein
- at least the first battery system is connected to at least the second battery system via a data connection, wherein
- the first battery system is operated based at least on operating information of the first battery system and of the second battery system, and wherein
- the operating information of the first battery system comprise at least one of location information, driving information, and status information of the first battery system and wherein the operating information of the second battery system comprise at least one of location information, driving information, and status information of the second battery system.

Such a method may provide improved operating of a battery system especially in case it is part of a plurality of interconnected battery systems each being is positioned in an electrically driven vehicle of public transport. Especially, such a method provides improved temperature behaviour of the batteries while being in use and an improved reliability of the battery systems and thus of the whole system of public transport.

The method as described thus serves for operating a first battery system, wherein the first battery system is part of a plurality of interconnected battery systems. With this regard, it may be the case that the method serves for operating one battery systems or a plurality of battery systems without leaving the scope of the present invention.

Interconnected battery systems according to the present invention shall further mean battery systems which are interconnected via a data connection so that data can be send from one battery system and can be received by a further battery system, and/or vice versa. Therefore, each battery system may comprise a communication unit comprising a sender and a receiver due to which it is enabled that at least the first battery system is connected to at least the second battery system and optionally to further battery systems via a data connection and is thus interconnected to the further battery system.

According to the method as described above, at least the first battery system of the plurality of battery systems is positioned in a first electrically driven vehicle of public transport and at least the second battery system of the plurality of battery systems is positioned in a second electrically driven vehicle of public transport. In other words, each of the first and the second battery system and potentially all further battery systems are provided in a vehicle of public transport and thus particularly each in a different vehicle of public transport.

A vehicle of public transport particularly may be a vehicle which may be used for transporting people and which mainly travels through predetermined routes. Examples for such vehicles of public transport comprise buses, tramways, trains or even taxicabs or the like. An important factor may be that different vehicles at least partly travel on the same predetermined routes, as will be explained in detail down below.

Further, an electrically driven vehicle according to the present invention shall thereby mean a vehicle, which is at least partly powered by a battery or by a battery-based energy storage device. Therefore, such a vehicle may be a fully electrically powered vehicle or a hybrid vehicle, for example.

Further, batteries in the light of the present invention shall particularly mean secondary batteries and as such rechargeable batteries. Non limiting examples comprise lithium batteries, such as lithium-ion batteries, e.g. LiB batteries.

According to the method as described above, it is provided that the first battery system is operated based at least on operating information of the first battery system and of the second battery system. In other words, operating information of the first battery system are used for operating the first battery system. Further, operating information of the second battery system and optionally of further battery systems are transferred to the first battery system via the data connection and are used for operating the first battery system, and preferably vice versa. Therefore, the battery system, or the communication unit, e.g. having a controller, respectively, may receive and process respective operating information and may base operating the battery system on these information, e.g. by giving respective controlling instructions.

With regard to the operating information, it is provided that the operating information of the first battery system comprise at least one of, preferably all of, location information, driving information, and status information of the first battery system and that the operating information of the second battery system comprise at least one of, preferably all of, location information, driving information, and status information of the second battery system. It may be provided that the operating information of all battery systems comprise location information, driving information, and status information of the respective battery system.

With regard to the driving information, it may be provided that these operating information is selected from the group comprising or consisting of route information, such as the planned route, e.g. the scheduled, i.e. planed stops, time information, such as the present time, which may give a hint for traffic jams, timetable information, which may use e.g. current delays and thus information about the timetable, as well as the location of arrival, speed information, such as the present speed as well as a speed profile of the driver, driving behaviour of the driver, which may give a further hint of respective requirements of a temperature or charging adjustment, for example. In particular the above information may give exact and precise information about the actual and future driving of the vehicle allowing a precise prediction of prospective charging and discharging procedures of the battery. It may thereby be provided that one, several or all of the afore-named parameters may be used as operating information.

It may further be provided that the status information is selected from the group comprising or consisting of state of charge of the battery, depth of discharge of the battery, state of health of the battery, and temperature of the battery. Especially the before-named information may provide detailed information about the status of the one or more batteries of the respective battery system and may thus be helpful for operating the battery system with a high reliability and durability. It may thereby be provided that one, several or all of the afore-named parameters may be used as operating information.

Regarding the location information, it may further be provided that this operating information is selected from the group comprising or consisting of the present location, geographic information, such as gradients and steep rises or steep slopes which require maximum charge (downhill) or maximum discharge rates (uphill), level crossings, traffic lights, curves and ambient conditions. In particular the above information may give exact and precise information about the surrounding of the vehicle allowing a precise prediction of prospective charging and discharging procedures of the battery. It may thereby be provided that one, several or all of the afore-named parameters may be used as operating information. Further, ambient conditions may be comprised, such as the present temperature or further weather conditions.

It may further be provided to use GPS information to predict acceleration / deceleration and other events of the vehicle.

Based on the above operating information, events, especially in the context of public transportation, are often predictable with regard to time and kind. An established route can predict when a hill is coming or a stop sign will be met. This route information can be used to operate a battery system to reduce impact of aging, while maintaining ideal temperatures for the cabin, energy storage system, and traction converter, like described down below, and can further ensure a preferred state of charge.

According to the above, parameters are detected and used which are important factors in order to allow predicting the working behaviour of a battery and in fact it may be predicted if a charging or discharging action will be required for finishing a route or a defined part thereof. Respective information are provided, may be analysed and used for operating the battery system. The required power consumption may be assessed based on the status information and based on the route which will be driven by the vehicle in the future.

The present method allows operating the battery system based on operating information not only of the battery system as such, but further based on operating information of at least one further battery system being provided in a further electrically driven vehicle of public transport. Especially with regard to electrically driven vehicles of public transport, the method as described as advantageous as will be explained down below.

The requirements of an electric bus fleet due to public transportation infrastructure is different than a "free driving" electric vehicle. A public electric bus, for example, has a well-defined route and predictable use cases (e.g. running line X within city Y). However, operational reliability is critical, as many people rely on this infrastructure. Failure of a system is a serious problem and should thus be avoided. Disruptions to public transportation lines happen e.g. by accidents, road blocks, protests, festivals, which at least in part are not predictable. All of them disrupt the flow of public transportation traffic and may further change the requirements with regard to charging the batteries and heating or cooling the battery, for example. An electric bus fleet must anyhow be "fluid", adaptable to change and delays. Therefore, for a battery-powered bus, sufficient on-board energy must be present to travel from one stop to the next. For example, if one bus of eight busses of a bus fleet would take too long to recharge, this delay has the potential to completely disrupt the timing of the entire bus line. Taking into consideration operating information of one or more further battery systems to operate a first battery system thus brings significant advantages.

Operational reliability is thereby important with regard to charging and discharging as well as cooling or heating purposes as will be shown down below.

With regard to temperature requirements, it has to be noted that these are important for bus passengers, battery and traction converter on the bus, which shows the complex temperature controlling of respective systems. For example, the cabin temperature within a bus has to be comfortable for its occupants. In winter it should be heated, but not too much (>10-15°C) as people are assumed to be wearing winter clothes. In summer, the bus must be cooled e.g. to 25°C.

Regarding the battery an even more challenging temperature control is required. In fact, with regard to a typical lithium ion battery, a maximum temperature may lie at 50°C with regard to a lifetime constraint and 80°C with regard to safety constraint. This leads to a typical average temperature of 30°C. Further, a temperature difference between neighbored cells of the battery may in the range of 5°C. The battery temperature should be kept in average around 30°C. However, maximum temperature can rise temporarily to 50°C without serious damage. For this reason, a typical maximum cooling water temperature of 15- 25°C is used. Especially, the safety constraint is the "existential" one as it prevents catastrophic failure.

Regarding the power converter, a cooling system should ensure an operating temperature which preferably always remains lower than 120°C for the IGBT, for example. For this reason, a typical maximum cooling water temperature of 60°C for the converter is used.

A typical energy consumption for an electric bus in service may be as follows. At temperatures of -20°C, an electric bus has a driving range of at least 30 km (if 20 kW used for heating), and 50 km without heating. This works out to 2.93 kWh/km with heating, or 1.85 kWh/km without heating. This demonstrates the need for heating optimization when the on-board battery is used as power source for the cabin heating.

Next to the temperature, requirements with regard to charging and discharging are important for a reliable control of a battery system. Batteries have an ideal state of charge (SOC) window, or depth of discharge (DOD) window, respectively, in which they operate meaning that there is an optimum use of the battery based on an intelligent control algorithm.

A main factor is that the aging impact varies based on SOC, DOD, temperature, and discharge/charge rate. So to get the most out of 1 kWh of energy, it's important to optimize are which conditions that 1 kWh is used, such that the aging impact is minimized.

Taking into consideration the above, both charging and discharging requirements as well as temperature control requirements may be met by the method according to the invention.

With regard to thermal management, the present method may preferably be based on a cooling/heating control algorithm which combine at least partly, preferably completely the following information: required temperature control parameters for the energy storage system, traction converter, and when necessary, the cabin temperature. This may ensure an ideal use of the battery to reduce the probability of "high aging impact events", such as characterized by high/low SoC, high/low temperature, and non-ideal SoC areas of operation. Further, forecasted events, such as regenerative breaking, approaching terrain, such as based on GPS information and upcoming hill, planned accelerations from the bus stop can be taken into consideration. The combined cooling of cabin, battery, and traction converter may thus be realized as one highly integrated system.

A central control algorithm can for example be based on the information sets above. Based on the use case of an electric bus in public transportation, favourable and unfavourable times to heat/cool the cabin, battery, and traction converter can as well be taken into consideration as will be shown below.

With regard to a favourable heating or cooling sequences of the cabin of the electrically driven vehicle, such sequences may be provided preferably taking into consideration the charge/discharge sequences and/or heating/cooling sequences of the battery. Thus, such sequences may be provided preferably in case constant velocity of the vehicle reached, as less battery power required for the vehicle; in case a grid is connected, e.g. during a charge of the battery; in case all doors are closed; in case deceleration and thus regenerative breaking is performed; and/or in case the bus has stopped in traffic. In contrast thereto, unfavourable times for performing respective heating/cooling sequences of the cabin comprise times at which the doors are open, during acceleration, as lots of battery power is required for driving the vehicle, and/or in challenging terrain, e.g. in case the vehicle travels uphill.

With regard to a favourable heating or cooling sequences of the battery and/or the traction converter of the electrically driven vehicle, such sequences may be provided preferably taking into consideration the respective operating information. In fact, such sequences may be provided preferably before and during bus acceleration or deceleration; before the start of the route, such as before the bus driver starts the vehicle on a cold or hot day, e.g. 1-5 min before start driving, or before ignition, respectively; and/or during charging, be it fast or slow.

Even though the operation of public transportation systems are predictable given a fixed route and given statistical information on passenger loads, control of cabin cooling is preferably carried out via real-time feedback control due to uncertain fluctuations of passenger load and ambient temperatures. In case the vehicle propulsion power is sharing the same energy source - i.e. the battery energy storage system (BESS) - as the cabin temperature control means, then the same fluctuations are reflected back to the operation of the BESS causing uncertain temperature fluctuations and in turn necessitating the real-time feedback control of the BESS temperature.

Next to the temperature adjustment requirements, especially charging and discharging requirements are of importance for operating the battery system according to the present invention. With this regard, it should mainly be secured that the batteries always are charged to a degree which secures finishing the desired route. More preferably, it can be secured that the batteries always are operated in a superb SOC or DOD, respectively.

Especially due to the fact that a battery system is operated based not only on the operating information of itself, but further based on operating information of at least one further battery system of a further vehicle, a prioritization scheme for multiple vehicles, such as multiple electric buses, may be realized. Thus, not only a single bus is considered, but bus fleet information are used to dictate e.g. ideal charging times at "opportunity" charging locations (bus stops) and at longer charging at the start and end of line. This allows preventing that a first vehicle is charged more than required and a further vehicle thus has to wait until the charging station is free. Further, as an overall assessment of the whole bus fleet is possible, it may be secured that all vehicles are charged in a sufficient manner so that disruptions can essentially be avoided.

Apart from that, the operating information provided are much more accurate compared to operating information of the first battery system, only, because of which an especially high reliability for operating the battery system may be given.

For example, as far as traffic obstructions are concerned, a second vehicle travelling the same route compared to the first vehicle can send its operating information with regard to traffic jams, construction sites, or delays, for example, in a timely and direct and reliable manner so that these data are always updated and thus representing the actual circumstances. The same holds e.g. for temperature data, so that controlling of the battery system can be realized based on especially reliable data. In other words, it may be prevented that operating the battery system is performed based on data which are not actual or which are imprecise, which in turn allows operating the battery system more exact.

Taking into consideration the usage of respective operating information, especially the respective discharging requirements may reliably be predicted and thus respective charging sequences may be controlled in a very appropriate manner. Further adequate cooling and/or heating sequences of the battery or the plurality of batteries of the battery system may be operated so that thermal management of the battery system is significantly improved.

Apart from the above, it may be secured or at least enhanced that the maximum charging or discharging power may be provided or kept constant over a long working period as well as at different ambient conditions as well as driving conditions. This allows the battery to securely and reliably provide the respective power in case it is required over a long lifetime.

With this regard, it may be provided that the operating information further comprise information about thermal requirements of a vehicle cabin and/or it may be provided that the operating information further comprise information about thermal requirements of a traction converter of a vehicle like it is described in detail above.

This method may in a preferred embodiment thus link the understanding of thermal impact on battery aging with the requirement that the environmental temperature in the cabin is maintained at comfortable level, thereby generally having a desired prioritization. The method may thus consider health of the battery system in terms of capacity, resistance and/or impedance, temperature, mechanical strain in the battery cells, and any other parameters that indicate battery health or charge. Further considerations may lie in the likelihood of a future event (%) and its character (delta kWh, kW).

With regard to thermal management, further features may comprise the use of the cabin air to cool the battery and the traction converter and/or the use of incoming air as the bus is moving to drive flow of air through the cabin, battery, and traction converter.

It may further be provided to use a combustor for heating in cold climates and/or an absorption chiller for providing cooling. Furthermore, temperature adjusting device, such as the chiller / combustor could be detached on mild days to optimize the bus weight.

According to a further embodiment, at least the first battery system and the second battery system are connected via a direct data connection. This may be realized, for example, by using wireless data connections as generally known in the art, such as radio connections, mobile web connections or further mobile communications. This embodiment allows an especially easy arrangement as the battery systems communicate directly with each other and therefore no center unit, or main processor unit, respectively, is required. With this regard, two or more than two battery systems may be interconnected so that each battery system may communicate with a plurality or all further battery systems in a direct manner.

According to a further embodiment, additionally or alternatively to a direct data connection, at least the first battery system and the second battery system are connected via a main processor unit, such as a microprocessor. This main processor unit may thus act as a kind of center unit, which is connected with at least the first, the second, or all further battery systems and/or which may not be part of a battery system but a standalone unit. However, it is not excluded from the present invention that the main processor unit is part of a battery system. According to this embodiment, the battery systems as such do not have to be directly interconnected with one or more further battery systems, but this indirect interconnection is sufficient. This embodiment may have the advantage according to which the electronic components and/or the computing power of each battery system may be reduced. This may be due to the fact that the main processor unit may comprise a sender, a receiver and a processor and may thus receive and forward respective data from and to one or more battery systems, either unprocessed or in a processed and e.g. prioritized manner, such as by sending controlling commands or controlling proposals, only.

According to a further embodiment, the operating information further comprise information about at least one of the actual or predicted weight of the vehicle and the actual or predicted passenger load of the vehicle. This embodiment allows an even more precise operation of the battery system as the weight is a significant factor which leads to reduced or intensified energy consumption and thus reduced or intensified discharging or charging processes. Therefore, e.g. a sensor may be provided which measures the weight of the vehicle. Such a sensor may for example be present in the vehicle as such, or it may be present, for example, at a parking place of the charging station, such as at bus stops or at charging stations. In the latter case, the sensor may be connected to the battery system e.g. via a wireless data connection. Alternatively, the passenger load may be taken into consideration, which in turn has a strong influence on the weight and thus on the required charging/discharging behaviour like described above. The passenger load may thereby be estimated based on empirical values, or passengers may be counted by entering or leaving the vehicle.

According to a further embodiment, the operating information further comprise information about at least one of the occupancy and the status of a charging station which is planned to be used for charging purposes. This embodiment may control the charging processes based on the actual or predicted status of the charging station, which may significantly improve a fluent work of multiple vehicles. For example, in case it is determined that a charging station has a failure, the charging processes may be intensified at further charging stations, such as by allowing more time for flash charging. This enables that even in case charging stations are not in use, the routes may be finished without problems and without or only few delay.

Apart from that, in case the operating information of a second battery system disclose that a second vehicle has a delay and thus will use a charging station in a time which was predetermined for the first vehicle, the latter may extend charging processes at earlier charging stations so that sufficient charging is allowed without coming in conflict with further vehicles.

Therefore, this embodiment may further significantly improve the reliability and timeliness of public transport.

It may further be provided that, if one bus becomes disabled and it is known that it will cause a delay, then it communicates this information with the rest of the fleet, or battery systems, respectively, so that they can reduce energy consumption and allow more time for flash charging, where heating and cooling can be supported by the charging infrastructure.

With this regard, for cooling and/or heating purposes, a physically-linked or common thermal management equipment for the on-board traction converter and energy storage systems may be used, with may be linked with regard to controlling or may be the same as used for heating and/or cooling the passenger cabin.

According to a further embodiment, the method comprises the further step of updating at least one, preferably all operating information. This embodiment improves the correctness of respective data and may thus lead to an especially improved reliability. An update may thereby be realized in defined sequences, such in sequences of 15 minutes or the like, or it may be realized on demand, e.g. by a driver of the vehicle.

Further, it may be realized that an update of the first battery system may be triggered in case irregularities appear, which, for example, may be detected by the second or a further battery system. For example, it may be provided that a second battery system detects a defect of a charging station or a traffic jam. Such information may subsequently be send to a main processor unit or to a further battery system. Subsequently, it can be directly displayed and/or taken into consideration, or it can firstly be evaluated if this information is relevant and/or if this information is already known. This embodiment thus again significantly enhances the reliability of systems of public transport.

Especially the above embodiment is realized reliably in case the method is performed online. According to this embodiment, a permanent data connection is upheld between respective battery systems and thus respective updates can be performed directly in case it is required. Further, it may be provided that predetermined or estimated data are checked by means of real data, which may further improve the present method.

According to a further embodiment, the method comprises the step of controlling at least one of charging the battery, heating or cooling the battery, and heating or cooling the cabin by discharging the battery and heating or cooling the traction converter by discharging the battery, based on the operating information.

With this regard, it is known for batteries that often there is a nonhomogeneous temperature distribution within the battery, or the battery cell, respectively, such as within lithium-ion-batteries. This may be a consequence of varying thermal diffusion path-lengths to the surrounding cooling media or ambient. In fact, temperature differences of exemplarily 16°C or eve more may occur, which may result in significant disadvantages. Such inhomogeneous temperature distributions may lead to the danger of thermal runaways of the batteries as well as inhomogeneous active material degradation leading to decrease in cell performance and accelerated aging. Especially in case a cell is used over years, internal cell imbalance will create uneven cell material degradation. The preferentially used portion of the cell will degrade more rapidly than the further cell composite. Therefore, reducing the thermal impact of thermal degradation would be an advantageous solution.

The charging/discharging steps of a battery such as a traction battery are often accompanied with losses in the battery which lead to rising cell temperature. The lifetime of traction batteries and their maximum charging or discharging power is mainly limited by the temperature limit of the battery cells. An intelligent or adaptive battery cooling system is a promising approach to extend or maximize the lifetime of the battery and to increase the rate of charging or discharging.

According to this embodiment, the goal of improving the temperature management is significantly improved.

Further, the temperature of the cabin and/or the traction converter may be controlled by discharging the battery and thus by the electric power provided by the battery. Such a step may be integrated into the present method especially effectively, as operating the battery is the main goal of this method.

To summarize the above, the present method describes a battery system operating concept which combines information of a plurality of electrically driven vehicles. The method allows taking into consideration thermal management of the battery, traction converter and/or cabin and further allows an integrated thermal management system. Further, improved charging sequences are provided.

A lower cooling and/or heating energy is required especially in case cooling and/or heating of the battery, the traction converter and eventually the cabin are controlled together. Further, by combining such cooling technologies, the overall weight of the electric vehicle may be reduced, thereby increasing driving energy efficiency as well as number of passengers a vehicle can carry. Less weight thereby further means lower initial cost, thereby decreasing the cost of the vehicle.

The present method thus solves the problem as how to minimize battery aging while maintaining ideal temperatures in the energy storage system and eventually a traction converter, and when necessary, the cabin temperature as well, thereby realizing a fluent public transport system. It is solved to combine cooling / heating systems in such a way to reduce energy and equipment costs.

With regard to further advantages and technical features of the before-described method it is referred to the description of the battery system, the use, the figures as well as the description of the figures.

The present invention further relates to a battery system being positioned in an electrically driven vehicle of public transport, wherein the battery system is part of a plurality of battery systems and is connected to at least a second battery system of the plurality of battery systems via a data connection, wherein the battery system is operateable based at least on its operating information and of operating information of the second battery system, wherein the operating information of the first battery system comprise at least one of location information, driving information, and status information of the first battery system and wherein the operating information of the second battery system comprise at least one of location information, driving information, and status information of the second battery system.

Such a battery system may show significantly enhanced lifetime and can especially improve the timeliness and reliability of a system of public transport, like it is described in detail with regard to the method.

With regard to further advantaged and technical features of the before-described battery system it is thus referred to the description of the method, the use, the figures as well as the description of the figures.

The present invention further relates to a use of operating information of at least a first battery system and a second battery system of a plurality of battery systems for controlling the first battery system, wherein the operating information of the first battery system comprise at least one of location information, driving information, and status information of the first battery system and wherein the operating information of the second battery system comprise at least one of location information, driving information, and status information of the second battery system.

Such a use of operating information may significantly enhance the lifetime of a battery system and can especially improve the timeliness and reliability of a system of public transport, like it is described in detail with regard to the method.

With regard to further advantaged and technical features of the before-described use it is referred to the description of the method, the battery system, the figures as well as the description of the figures.

### Brief description of drawings

Additional features, characteristics and advantages of the subject-matter of the invention are disclosed in the subclaims, the figures and the following description of the respective figures and examples, which -in an exemplary fashion- show embodiments according to the invention.

In the figures:
Figure 1 shows a schematic view of an embodiment of a battery system;
Figure 2 a schematic view of a further embodiment of a battery system;
Figure 3 shows a schematic diagram visualizing an embodiment of a method of operating a battery system; and
Figure 4 shows a schematic diagram visualizing a further embodiment of a method of operating a battery system.

### Description of embodiments

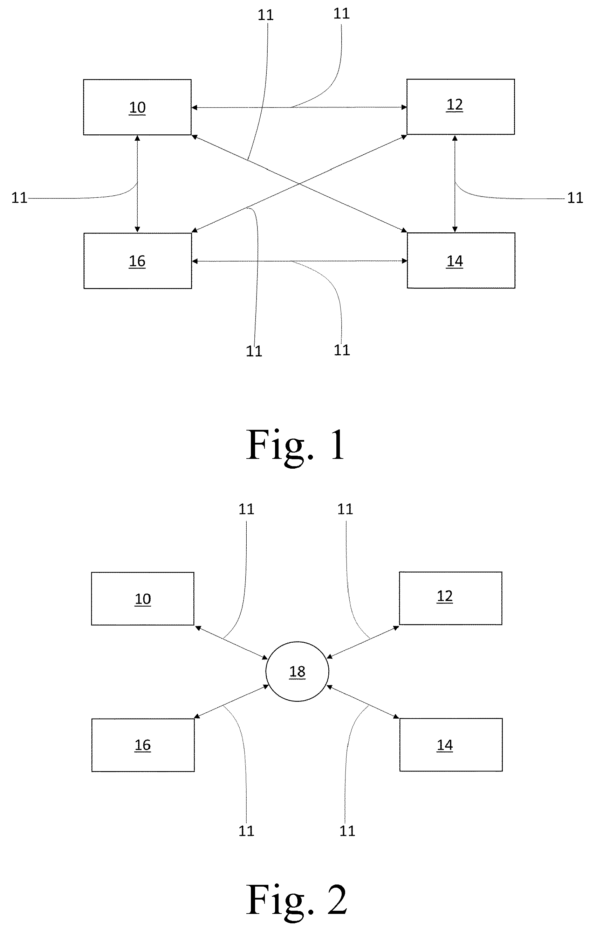

In figure 1, a battery system 10 is shown, wherein the battery system 10 is part of a plurality of battery systems 10, 12, 14, 16 and is connected to the further battery systems 12, 14, 16 of the plurality of battery systems 10, 12, 14, 16 via a respective data connection 11. Each battery system 10, 12, 14, 16 is positioned in an electrically driven vehicle of public transport, such as in a bus. It is further provided that the battery system 10 is operateable based at least on its operating information and of operating information of the further battery system 12, 14, 16. In particular, it may be provided that each battery system 10, 12, 14, 16 may be operated based on operating information of all battery systems 10, 12, 14, 16. With regard to the operating information, it may be provided that these information comprise location information, driving information, and status information.

With this regard, each battery system 10, 12, 14, 16 may comprise a processor which may be connected to or which may comprise a sender for sending data and a receiver for receiving data. The processor may thus decide which data to send to the further battery systems 10, 12, 14, 16 and may further process received data and provide respective operating commands for operating the battery system 10, 12, 14, 16. In detail, it may be decided when to charge the battery, what degree of state of charge to reach, what kind of charging to use, such as flash charging or "normal" charging, when and to what degree to heat or cool the battery, when and to what degree to heat or cool the cabin and/or, when and to what degree to heat or cool the traction converter.

According to figure 1, the battery systems 10, 12, 14, 16 are connected via respective data connections 11 in a direct manner. Therefore, all battery systems 10, 12, 14, 16 are directly connected to further battery systems 10, 12, 14, 16 via the data connections 11, wherein the data connections are preferably wireless.

According to figure 2, all battery systems 10, 12, 14, 16 are indirectly connected to further battery systems 10, 12, 14, 16 via the data connections 11 and via a main processor unit 18, or a central unit, respectively. The main processor unit 18 may request defined data from the battery systems 10, 12, 14, 16 and/or may operate the data which are send by the battery systems 10, 12, 14, 16 and/or may send respective data, or operating information, respectively, to the further battery systems 10, 12, 14, 16. However an additional direct data connection 11 is not excluded in this embodiment.

An embodiment for performing a method of controlling a battery system 10, 12, 14, 16 may be as follows.

A comparably simple approach to realize the benefits of the proposed method is to combine an offline determined control strategy with standard feedback control.

Assuming the case of a battery powered electric bus with cooling and heating systems for the traction converter and the energy storage system, i.e. the battery, an optimal control problem can be set-up considering the combined load of the traction chain and the thermal management functions and their impact on the battery. The speed trajectory of the bus over the planned route as well as the passenger load profile can be fed into the optimization problem as constraints while the minimization of the temperature deviations and the battery aging effects can be used to form an objective function. If the traction converter and the battery were treated as inertia free the optimization problem could be solved independently at any instant by discretizing the route into small pieces to obtain the corresponding trajectory for the heating/cooling effort. Since this is not the case, a mathematical model is preferred to account for the changes of the thermal states. This mathematical model will be key to determine the possibilities for load and impact shifting by enabling precooling or preheating actions. By including the mathematical model into the optimization problem a solution can be obtained offline with appropriate methods to obtain the trajectories for the heating/cooling efforts. A numerical solution by means of multiple shooting is one possible method. From a practical perspective, a possible formulation of the optimization problem is to adjust the setpoints of lower level control loops of the heating and cooling systems, which will also take care of the uncertainties regarding ambient conditions or passenger load.

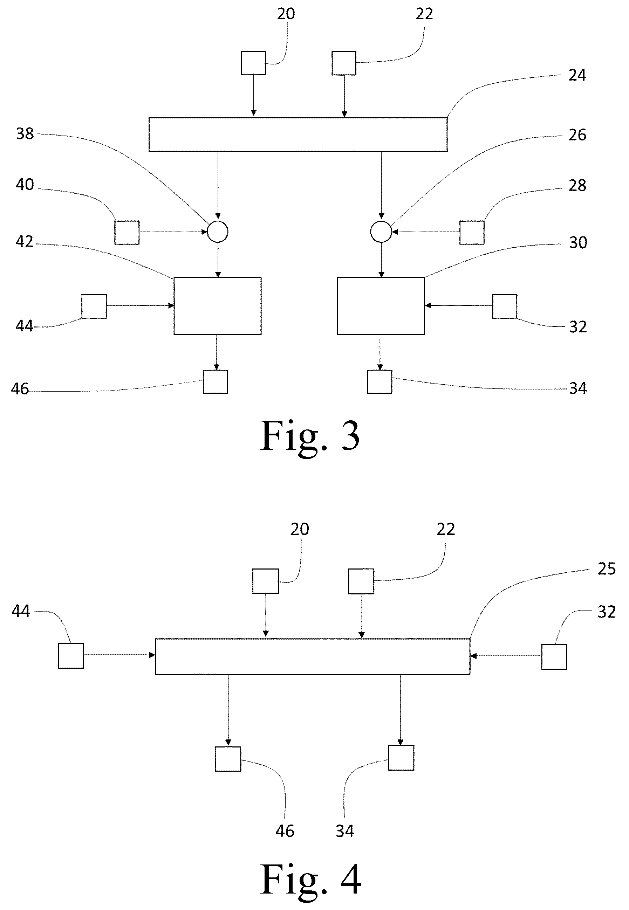

For real-time implementation on the bus, the optimal solution needs to be downloaded as a trajectory to a microcontroller and a means of determining the valid segment of the solution corresponding to the current point on the route needs to be supplied, preferably via a GPS receiver. As an alternative or redundant solution a kilometer counter could be added to determine the location of the bus with respect to the bus route and the corresponding optimal control action. The optimization problem can be extended to take flash charging stations into account. (Flash) charging stations may be used also to correct possible errors accumulated on the kilometer counter. This scheme is shown in the Figure 3. In detail it is shown that a GPS signal 20 is taken for an optimal control strategy 24. Further, external information 22, such as ambient conditions, and in particular operating information from different battery systems 10, 12, 14, 16 may be used for determining the control strategy 24. In a first control line 38, taking into consideration the set point 40 of the traction converter, the converter temperature control 42 is determined thereby using the converter temperature override limit 44. The converter temperature control 42 may thus be used for providing a traction converter thermal management system 46. Accordingly, in a second control line 26, taking into consideration the set point 28 of the battery, the battery temperature control 30 is determined thereby using the battery temperature override limit 32. The battery temperature control 30 may thus be used for providing a battery thermal management system 34.

An exemplary solution described in the embodiment according to figure 3 represents one case with fixed parameters such as those for ambient temperature and passenger loads. These parameters are subject to change and the optimization can be repeated with a number of different parameter combinations to obtain a bank of offline strategies instead of a single strategy. The online system can be adapted to receive an external signal e.g. from an ambient temperature sensor or from a date counter for the day of the week to choose the corresponding strategy. This external signal can also come from an estimation or learning algorithm that determines passenger load or other relevant parameter changes from internal system measurements e.g. from acceleration profiles.

However, it has to be noted that even in case the method is not performed online all the time, operating information of respective battery systems 10, 12, 14, 16 are generally taken into consideration.

An alternative to obtaining an offline-computed control strategy is to solve the previously described optimization problem online and thus preferably being constantly online. This approach has the major advantage over all the previous solutions that the optimization will always take the most current values of the external parameters. In this case any variation over ambient temperature or passenger load can be accurately taken into account without relying on a grid of offline solutions and therefore this solution will be closest to optimal. In a further step the solution can be integrated to cover the individual control loops but a formulation that works with lower level temperature control loops is also possible along with the accommodation of any external information influencing the optimization problem. The major disadvantage of this solution is the requirement of higher computational capability from the onboard control systems, which, however, can mostly be accepted. The preferred formulation to realize the solution would be the method described as model predictive control. The solution is illustrated in Figure 4

In detail it is shown that a GPS signal 20 as well as external information 22 are taken for a model 25 predictive for traction converter and battery temperature control. The combined model for traction converter and battery thus takes into consideration both the converter temperature override limits 44 and battery temperature override limits 32 and may thus be used for providing both a traction converter thermal management system 46 as well as a battery thermal management system 34.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

### Reference signs list

- 10: battery system
- 11: data connection
- 12: battery system
- 14: battery system
- 16: battery system
- 18: main processor unit
- 20: GPS signal
- 22: external information
- 24: control strategy
- 25: model
- 26: control line
- 28: set point
- 30: battery temperature control
- 32: battery temperature override limit
- 34: thermal management system
- 38: control line
- 40: set point
- 42: converter temperature control
- 44: converter temperature override limit
- 46: thermal management system

## Claims

1. Method of operating a first battery system (10), wherein the first battery system (10) is part of a plurality of interconnected battery systems (10, 12, 14, 16), wherein
- at least the first battery system (10) of the plurality of battery systems (10, 12, 14, 16) is positioned in a first electrically driven vehicle of public transport and at least a second battery system (12, 14, 16) of the plurality of battery systems (10, 12, 14, 16) is positioned in a second electrically driven vehicle of public transport, wherein
- at least the first battery system (10) is connected to at least the second battery system (12, 14, 16) via a data connection (11), wherein
- the first battery system (10) is operated based at least on operating information of the first battery system (10) and of the second battery system (12, 14, 16), and wherein
- the operating information of the first battery system (10) comprise at least one of location information, driving information, and status information of the first battery system (10) and wherein the operating information of the second battery system (12, 14, 16) comprise at least one of location information, driving information, and status information of the second battery system (12, 14, 16).

2. Method according to claim 1, **characterized in that** at least the first battery (10) system and the second battery system (12) are connected via a direct data connection (11).

3. Method according to claim 1 or 2, **characterized in that** at least the first battery system (10) and the second battery system (12) are connected via a main processor unit (18).

4. Method according to any of the preceding claims, **characterized in that** the location information is selected from the group comprising the present location, geographic information, level crossings, traffic lights, curves and ambient conditions.

5. Method according to any of the preceding claims, **characterized in that** the driving information is selected from the group comprising route information, time information, timetable information, speed information, and driving behaviour of the driver.

6. Method according to any of the preceding claims, **characterized in that** the status information is selected from the group comprising state of charge of the battery, depth of discharge of the battery, state of health of the battery, and temperature of the battery.

7. Method according to any of the preceding claims, **characterized in that** the operating information further comprise information about thermal requirements of a vehicle cabin.

8. Method according to any of the preceding claims, **characterized in that** the operating information further comprise information about thermal requirements of a traction converter of a vehicle.

9. Method according to any of the preceding claims, **characterized in that** the operating information further comprise information about at least one of the actual or predicted weight of the vehicle and the actual or predicted passenger load of the vehicle.

10. Method according to any of the preceding claims, **characterized in that** the operating information further comprise information about at least one of the occupancy and the status of a charging station which is planned to be used for charging purposes.

11. Method according to any of the preceding claims, **characterized in that** the method comprises the further step of updating at least one operating information.

12. Method according to any of the preceding claims, **characterized in that** the method comprises the step of controlling at least one of charging the battery, heating or cooling the battery, and heating or cooling the cabin by discharging the battery and heating or cooling the traction converter by discharging the battery, based on the operating information.

13. Method according to any of the preceding claims, **characterized in that** the method is performed online.

14. Battery system being positioned in an electrically driven vehicle of public transport, wherein the battery system (10) is part of a plurality of battery systems (10, 12, 14, 16) and is connected to at least a second battery system (12, 14, 16) of the plurality of battery systems (10, 12, 14, 16) via a data connection (11), wherein the battery system (11) is operateable based at least on its operating information and of operating information of the second battery system (12, 14, 16), wherein the operating information of the first battery system (10) comprise at least one of location information, driving information, and status information of the first battery system (10) and wherein the operating information of the second battery system (12, 14, 16) comprise at least one of location information, driving information, and status information of the second battery system (12, 14, 16).

15. Use of operating information of at least a first battery system (10) and a second battery system (12, 14, 16) of a plurality of battery systems (10, 12, 14, 16) for controlling the first battery system (10), wherein the operating information of the first battery system (10) comprise at least one of location information, driving information, and status information of the first battery system (10) and wherein the operating information of the second battery system (12, 14, 16) comprise at least one of location information, driving information, and status information of the second battery system (12, 14, 16).
